# EUROPEAN PATENT SPECIFICATION

(11) **EP 1 800 941 B1**
(45) Date of publication and mention of the grant of the patent: **09.06.2010**
(21) Application number: 06125131.0
(22) Date of filing: 30.11.2006
(51) Int. Cl.: B60N 2/427, B60R 21/237

(54) **Passenger protection device**
Passagierschutzvorrichtung
Dispositif de protection d'un passager

(30) Priority: 01.12.2005 JP 2005348326; 01.12.2005 JP 2005348329
(43) Date of publication of application: 27.06.2007
(73) Proprietor: TOYODA GOSEI CO., LTD., Nishikasugai-gun, Aichi 452-8564 (JP); Toyota Jidosha Kabushiki Kaisha, Toyota-shi, Aichi 471-8571 (JP)
(72) Inventor: Suzuki, Shigeyuki, Nishikasugai-gun Aichi 452-8564 (JP); Fukawatase, Osamu, Toyota-shi Aichi 471-8571 (JP); Sekizuka, Makoto, Toyota-shi Aichi 471-8571 (JP)
(74) Representative: TBK-Patent

(56) References cited:
- EP-A- 1 564 082
- JP-A- 2002 079 861
- JP-A- 2004 338 514
- US-A1- 2003 052 519
- US-A1- 2006 017 266

## Description

The present invention relates to a passenger protection device according to the preamble of claim 1 incorporating an air bag inflated and deployed at the seat rest of a vehicle seat by gas generated from a gas generation source.

A seat belt includes a shoulder belt portion and a lap belt portion. The shoulder belt portion is extended diagonally from the shoulder, across the front of the chest, and to the side of the hip. The lap belt portion is extended horizontally, for example, from the side of the left hip, across the front of the waist, and toward the side of the right hip. Such a seat belt is used by arranging the lap belt portion at an appropriate position on the waist (i.e., in front of the pelvis).

During a frontal crash, a passenger forced forward by inertia is restrained in the seat by the seat belt. However, if the passenger is sitting on the seat in a reclined state, the passenger's waist may move forward and away from the lap belt portion. This is referred to as a submarine phenomenon.

JP-A- 2001-239872 discloses a passenger protection device for inflating an air bag arranged in a seat rest. The seat rest lifts the cushion of the seat rest to prevent the submarine phenomenon from occurring. The air bag is arranged on a base plate so as to generally extend throughout the entire length of the seat rest. A shock absorber is arranged between the air bag and the cushion of the seat rest.

JP-A-2005-67465 discloses a passenger protection device having an air bag module arranged in a seat rest. The air bag module is accommodated in an accommodating portion formed in a seat pan (bottom frame of the seat rest). The air bag module includes a retainer for retaining a gas generator. The retainer is fixed by screws to the bottom of the accommodating section. The cushion of the seat rest is lifted when the air bag of the air bag module inflates and deploys.

JP-A-2002-79861 discloses a passenger protection device for inflating and developing an air bag arranged in a seat rest to push the buttocks of the passenger backward to prevent the submarine phenomenon from occurring. Further, JP-A- 2002-79861 discloses a configuration in which the distal end of the air bag is cactus-folded. JP-A- 2005-193844 discloses a passenger protection device for inflating an air bag arranged in a seat rest to lift the cushion of the seat rest and prevent the submarine phenomenon from occurring.

However, in the device disclosed in JP-A- 2001-239872, the air bag is placed on a flat portion of the base plate, and the shock absorber is placed on the air bag. With such a configuration, the lower surface of the cushion of the seat rest that is joined with the shock absorber and the base plate has a bumpy shape. This affects the sitting comfort of the seat rest. In the device disclosed in JP-A- 2005-67465, the lower surface of the cushion of the seat rest is depressed into the accommodating section formed in the seat pan. Such depression of the cushion affects the sitting comfort of the seat rest.

The occurrence of the submarine phenomenon cannot be sufficiently prevented just by lifting the cushion portion at the front end of the seat rest as in the device disclosed in JP-A-2005-193844. In order to effectively prevent the occurrence of the submarine phenomenon, it is desirable that the cushion portion near the central part with respect to the forward direction of the seat rest be lifted as in the device disclosed in JP-A- 2002-79861. The configuration in which the distal end of the air bag is cactus-folded has an advantage in that the air bag can be easily inflated and deployed from the front towards the rear of the seat, and in that the air bag can be folded and housed in a compact size. However, the configuration for easily inflating and developing the air bag from the front towards the rear of the seat does not allow the air bag to rapidly inflate upward and lift the cushion. Furthermore, the configuration in which the air bag has a number of folds due to the cactus-folding at the distal end of the air bag affects the sitting comfort of the seat. Furthermore, it is difficult to form a number of folds when cactus-folding the distal end of the air bag if the length from the basal end to the distal end of the air bag is short.

Further passenger protection devices are shown in JP-A-2002-079861 and JP-A-2004-338514. The latter of which shows the features of the preamble of claim 1.

It is an object of the present invention to provide a passenger protection device for preventing the occurrence of the submarine phenomenon without affecting the sitting comfort.

The object is achieved by the feature combination of claim 1. Further advantageous developments are defined in the dependent claims.

One aspect of the present invention refers to a passenger protection device for arrangement in a vehicle. The passenger protection device includes a seat rest mountable in the vehicle for supporting a passenger. A seat cushion forming the seat rest. A bottom frame supports the seat cushion from underneath and includes a downwardly extending accommodation recess. The protection device further includes a gas generation source and an air bag which inflates and deploys at the seat rest by gas generated from the gas generation source. The air bag lifts the seat cushion when inflated and deployed. A holder, fixed to the bottom frame, accommodates the gas generation source. The holder is contained in the air bag, arranged in the accommodation recess, and includes a support surface facing the lower surface of the seat cushion for supporting the air bag.

Another aspect of the present invention refers to a passenger protection device for arrangement in a vehicle. The passenger protection device includes a seat rest mountable in the vehicle for supporting a passenger. A seat cushion forms the seat rest. A bottom frame supports the seat cushion from underneath. The protection device further includes a gas generation source and an air bag which inflates and deploys at the seat rest by gas generated from the gas generation source. The air bag is inflated and deployed from front to rear of the seat rest on the bottom frame. The air bag has a distal end inwardly folded from the rear towards the front of the seat rest when in a state of non-inflation and non-deployment.

Other aspects and advantages of the present invention will become apparent from the following description, taken in conjunction with the accompanying drawings, illustrating by way of example the principles of the invention.

The invention, together with the object and advantages thereof, may best be understood by reference to the following description of the presently preferred embodiments together with the accompanying drawings in which:
Fig. 1A is a cross-sectional side view showing a seat rest according to a first embodiment;
Fig. 1B is an enlarged cross-sectional side view showing part of the seat rest;
Fig. 2 is a cross-sectional front view showing the seat rest;
Fig. 3 is a cross-sectional plan view showing the seat rest;
Fig. 4 is an enlarged cross-sectional side view showing part of a seat rest according to a second embodiment of the present invention;
Fig. 5 is an enlarged cross-sectional side view showing part of a seat rest according to a third embodiment of the present invention;
Fig. 6 is an enlarged cross-sectional side view showing part of a seat rest according to a comparative example;
Fig. 7A is a cross-sectional side view showing a seat rest according to a fourth embodiment of the present invention;
Fig. 7B is an enlarged cross-sectional side view showing part of the seat rest;
Fig. 8 is a cross-sectional front view showing the seat rest;
Fig. 9 is a cross-sectional plan view showing the seat rest;
Fig. 10 is an enlarged cross-sectional side view showing part of a seat rest according to a fifth embodiment of the present invention; and
Fig. 11 is an enlarged cross-sectional side view showing part of a seat rest according to a sixth embodiment of the present invention.

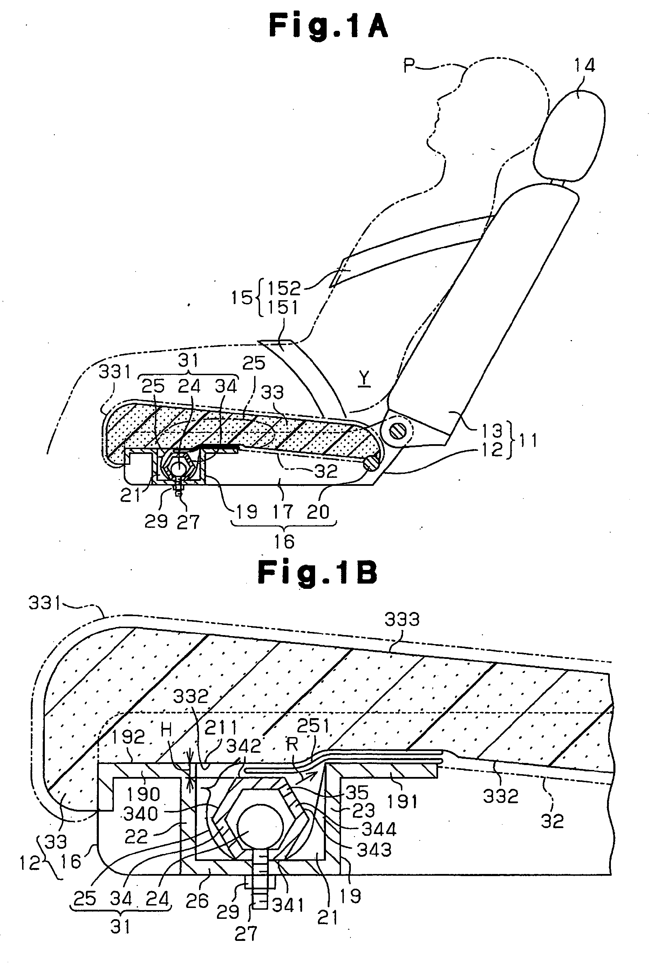

A passenger protection device according to a first embodiment of the present invention will now be described with reference to Figs. 1 to 3. As shown in Fig. 1A, a seat 11, which is arranged in the passenger compartment of a vehicle (not shown), includes a seat rest 12, a backrest 13 that can be reclined backward with respect to the seat rest 12, and a headrest 14 arranged at the top of the backrest 13.

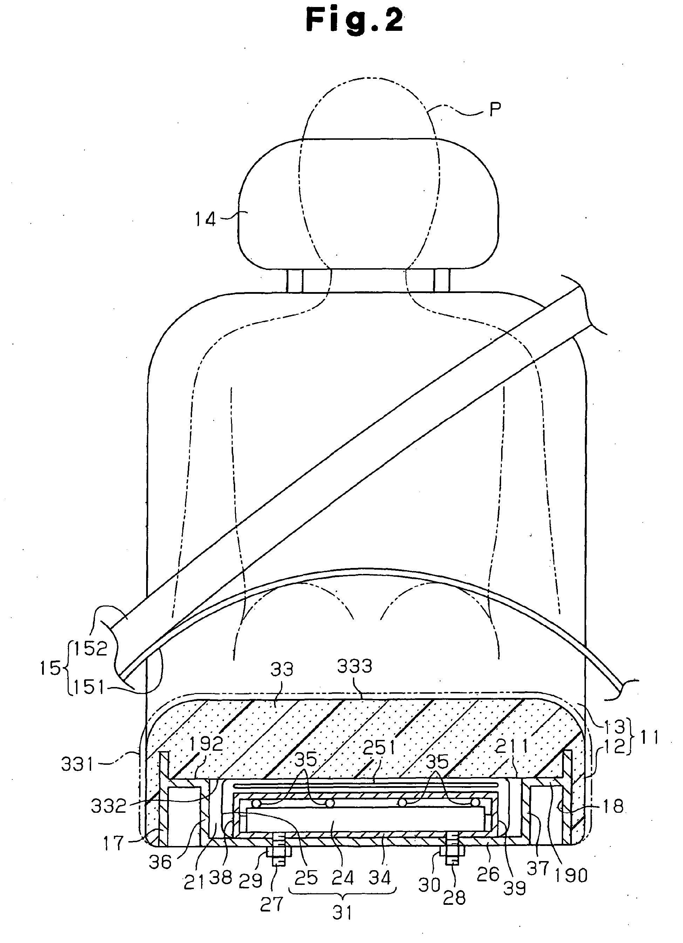

As shown in Fig. 2, the seat belt 15, which is a three point seat belt, restrains a passenger P who is sitting on the seat 11. The seat belt 15 has a lap belt portion 151, which is extended horizontally from the left side of the waist Y of the passenger P, across the front of the waist Y, and toward the right side of the waist Y. The seat belt 15 has a shoulder belt portion 152, which is extended diagonally from the shoulder, across the front of the chest, and to the side of the waist Y.

Referring to Fig. 1A, a metal frame 16, which forms the seat rest 12, includes a left side frame 17, a right side frame 18, a bottom frame 19, and a rod-shaped rear frame 20. The bottom frame 19 is connected to and extends between front ends of the side frames 17 and 18 (side frame 18 is shown in Fig. 2). The rear frame 20 extends between the rear ends of the side frames 17 and 18.

Referring to Fig. 1B, the bottom frame 19 includes a support wall 190, a front wall 22, and a rear wall 23, two side walls 36 and 37 (see Fig. 2), and a bottom wall 26. The front wall 22 extends vertically downward from the support wall 190. The side walls 36 and 37 connect the side ends of the front wall 22 and rear wall 23. The support wall 190, the front wall 22, the rear wall 23, the side walls 36 and 37, and the bottom wall 26 each have a planar shape. The front wall 22, the rear wall 23, the side walls 36 and 37, and the bottom wall 26 form an accommodation recess 21 extending downward. In other words, the accommodation recess 21 extends downward in the bottom frame 19. The accommodation recess 21 extends toward the right and left of the seat rest 12.

The height of the front wall 22 from the bottom wall 26 of the accommodation recess 21 is set to be the same as the height of the rear wall 23 from the bottom wall 26. The support wall 190 and the bottom wall 26 extend parallel to each other.

As shown in Figs. 1B and 2, a retaining tube 34, which has a generally equilateral hexagonal shape, is accommodated in the accommodation recess 21. An inflator 24 serving as a gas generation source is retained in the retaining tube 34. The retaining tube 34 is incorporated in an air bag 25 made of fabric. The inflator 24 is cylindrical and fastened by screws to the bottom wall 26 of the accommodation recess 21. Two screws 27 and 28 are fixed to the peripheral wall of the inflator 24. The screws 27 and 28 extend out of the air bag 25 and the retaining tube 34 and through the bottom wall 26. Nuts 29 and 30 are fastened to the screws 27 and 28, which project downward from the bottom wall 26. This fixes the inflator 24 and the retaining tube 34 in a state connected with each other to the bottom wall 26.

The retaining tube 34 has a right end 38 spaced apart from the side wall 36 and a left end 39 spaced apart from the side wall 37. The distance between the end 38 and the side wall 36 and the distance between the end 39 and the side wall 37 are respectively set to be smaller than or equal to 50 mm.

As shown in Fig. 1B, the retaining tube 34 has a peripheral surface 340 formed by six sides, or planes. The air bag 25 containing the retaining tube 34 is connected to the inflator 24 in a state held between the bottom wall 26 and one of the six planes forming the peripheral surface 340 of the retaining tube 34, namely, plane 341. The plane 341 is hereinafter referred to as the bottom surface 341.

The air bag 25 forms the passenger protection device 31 with the inflator 24, the retaining tube 34, and the seat rest 12. The air bag 25 extends from the inside of the accommodation recess 21 onto a rear support wall 191 located at the rear portion of the support wall 190. The distal end of the air bag 25 is folded inward from the rear towards the front of the seat rest 12 of the seat 11. An inwardly folded part 251 at the distal end of the air bag 25 is held on the retaining tube 34 and the rear support wall 191 in a flat state.

The inwardly folded part 251 is partially held on one of the six planes of the peripheral surface 340 forming the retaining tube 34, namely, surface 342. The surface 342 is hereinafter referred to as the support surface 342. The support surface 342 and the bottom surface 341 extend parallel to each other. The support surface 342 extends parallel to an upper surface 192 of the support wall 190 at a position lower than the upper surface 192. In other words, the support surface 342 faces toward an opening 211 of the accommodation recess 21. The difference H between the level of the support surface 342 and the level of the upper surface 192 is set to be less than or equal to 10 mm.

One of the six planes of the peripheral surface 340 that is located next to and towards the rear of the support surface 342, namely, plane 343, is defined by a flat plate portion 344. The flat plate portion 344 includes plural rows of gas passage holes 35. As shown in Fig. 2, the rows of gas passage holes 35 extend in the longitudinal direction of the retaining tube 34 (i.e., longitudinal direction of accommodation recess 21). Each gas passage hole 35 is directed diagonally upward and toward the rear, as shown with an arrow R in Fig. 1B.

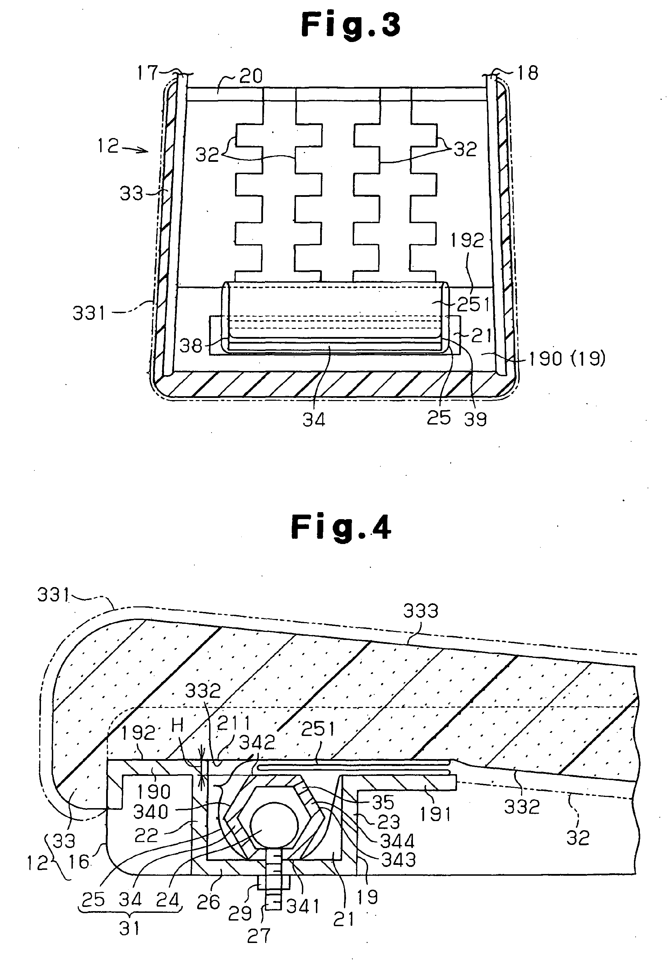

As shown in Figs. 1A and 3, a cushion tension spring 32 for improving sitting comfort extends between the rear support wall 191 of the bottom frame 19 to the rear frame 20. A seat cushion 33 forming the seat rest 12 together with the frame 16 covers the frame 16, the cushion tension spring 32, and the air bag 25 from above. The seat cushion 33 is covered by a cover 331 made of cloth or leather. The bottom frame 19 supports the seat cushion 33 from below, and the support surface 342 of the retaining tube 34 in the accommodation recess 21 faces toward a lower surface 332 of the seat cushion 33.

When a collision detection means (e.g., abnormal acceleration detection means) (not shown) detects collision (e.g., abnormal acceleration), a control means (not shown) operates the inflator 24, and high pressure gas is supplied from the inflator 24 into the retaining tube 34. The high pressure gas in the retaining tube 34 is supplied to the air bag 25 through the gas passage holes 35. This inflates and deploys the air bag 25 towards the back of the seat rest 12 from the accommodation recess 21 on the bottom frame 19, as shown by the dotted line in Fig. 1A. The rear support wall 191 of the bottom frame 19 supports the inflated and deployed air bag 25 from underneath. The inflation and deployment of the air bag 25 lifts the seat cushion 33 and the rear of the thighs of the passenger P sitting in the seat 11. The lifting of the thighs of the passenger P aids in restraining the passenger P so that the waist Y of the passenger P does not move forward.

The first embodiment has the advantages described below.
(1) When the lower surface 332 (rear surface) of the seat cushion 33 is greatly depressed into the accommodation recess 21, the upper surface 333 of the seat cushion 33 is partially depressed. This lowers sitting comfort. However, the support surface 342, which is slightly lower than the upper surface 192 of the support wall 190 in the bottom frame 19 suppresses the depression of the seat cushion 33 into the accommodation recess 21. In other words, the retaining tube 34, which includes the support surface 342 that suppresses the depression of the seat cushion 33 into the accommodation recess 21, helps to prevent sitting comfort of the seat rest 12 from decreasing.
(2) Part of the air bag 25 (folded and overlapped portion of the inwardly folded part 251 and other parts of the air bag 25) is held on the support surface 342. The support surface 342 is arranged at a position lower than the upper surface 192 of the support wall 190. When part of the air bag 25 is held on the support surface 342, the inwardly folded part 251 of the air bag 25 compensates for the difference between the support surface 342 and the upper surface 192 of the support wall 190. Therefore, the support surface 342 facing toward the opening 211 of the accommodation recess 21 leaves space for part of the air bag 25 held on the support surface 342 in the accommodation recess 21. The arrangement of the support surface 342 in the accommodation recess 21 so as to face towards the opening 211 of the accommodation recess 21 prevents the partial depression of the seat cushion 33 by part of the air bag 25.
(3) The planar support surface 342 prevents the depression of the seat cushion 33. Further, the planar support surface 342 is a preferable location for holding and keeping part (inwardly folded part 251) of the air bag 25 in a folded state.
(4) In the present embodiment, the air bag 25 inflates and deploys towards the rear of the seat rest 12 from the accommodation recess 21. Preferably, the gas passage holes 35, through which high pressure gas is ejected from the retaining tube 34 into the air bag 25, extend diagonally upward and toward the rear. Such gas passage holes 35 are appropriately and easily formed in the retaining tube 34. In the present embodiment, the plane 343 located next to and towards the rear of the support surface 342 is a suitable location for the gas passage holes 35.
(5) When the retaining tube 34, which has a substantially equilateral hexagonal tubular shape, is arranged on the bottom wall 26, the bottom surface 341 is in plane contact with the upper surface of the bottom wall 26. Thus, the support surface 342 extends parallel to the bottom wall 26. As a result, the inflator 24 may be fastened with screws to the bottom wall 26 without having to worry about the direction the support surface 342 is facing. That is, the retaining tube 34 having a generally equilateral hexagonal shape is suitable for use as a holder.
(6) The distance between the end 38 of the retaining tube 34 and the side wall 36 and the distance between the end 39 of the retaining tube 34 and side wall 37 are respectively set to be smaller than or equal to 50 mm. In other words, both ends of the air bag 25 are located near the two ends of the accommodation recess 21. Furthermore, the areas near the two ends of the air bag 25 are held between the retaining tube 34 and the bottom wall 26. Therefore, the air bag 25 inflates and deploys without moving toward the left or the right and appropriately lifts the seat cushion 33.

A second embodiment of the present invention will now be described with reference to Fig. 4. In the second embodiment, to avoid redundancy, like or same reference numerals are given to those components that are the same as the corresponding components of the first embodiment. Such components will not be described in detail. In the second embodiment, the rear support wall 191, which is located towards the rear of the support wall 190, is formed at a level lower than that of the support wall 190. The support surface 342 is arranged at the same level as the upper surface 192 of the rear support wall 191. The support surface 342 faces toward the opening 211 in the accommodation recess 21, and the inwardly folded part 251 is held on the support surface 342. The same advantages as the first embodiment are obtained in the second embodiment.

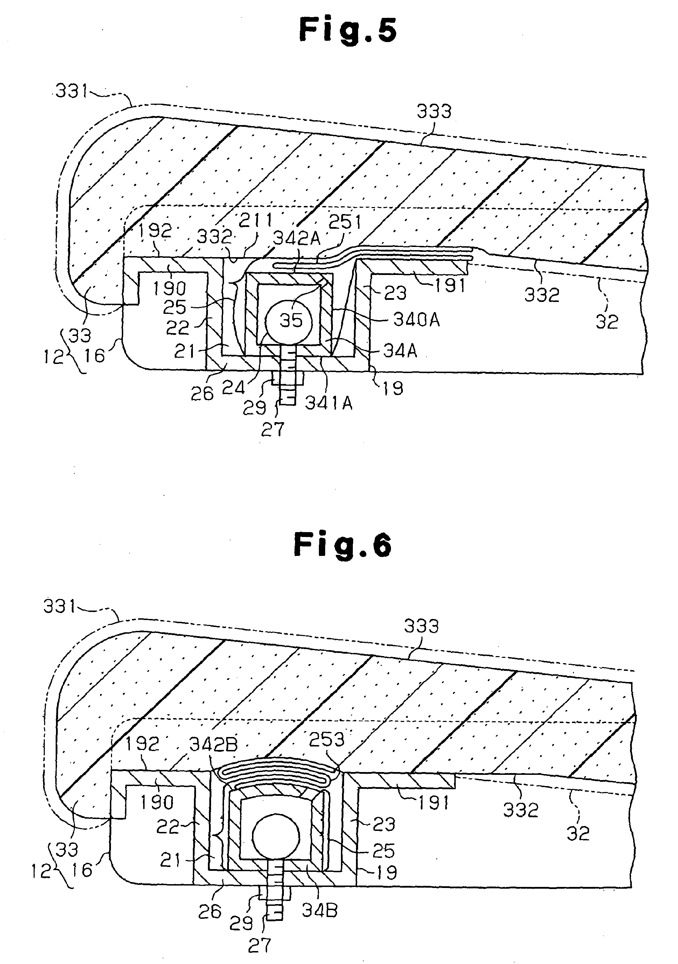

A third embodiment of the present invention will now be described with reference to Fig. 5. In the third embodiment, to avoid redundancy, like or same reference numerals are given to those components that are the same as the corresponding components of the first embodiment. Such components will not be described in detail. In the third embodiment, a square retaining tube 34A is used as the holder. Gas passage holes 35 are formed in a corner of the retaining tube 34A. Nuts 29 and 30 are fastened to screws 27 and 28, which project downward from the bottom wall 26, to fix an inflator 24 and the retaining tube 34A to the bottom wall 26. An air bag 25 containing the retaining tube 34A is connected to the inflator 24 in a state held between the bottom wall 26 and one of the four planes of the peripheral surface 340A of the retaining tube 34A, namely surface 341A.

Part of the inwardly folded part 251 is held on one of the four planes forming the peripheral surface 340A of the retaining tube 34A, namely surface 342A. The surface 342A is hereinafter referred to as the support surface 342A. The support surface 342A extends parallel to the upper surface 192 of the support wall 190 at a level lower than the upper surface 192. In other words, the support surface 342A faces the opening 211 of the accommodation recess 21 in the accommodation recess 21. The difference H between the level of the support surface 342A and the level of the upper surface 192 is set to be smaller than or equal to 10 mm.

The third embodiment has the same advantages as the first embodiment. The dimension of the support surface 342A in the forward direction of the vehicle may be lengthened to be made longer than that of the support surface 342 of the retaining tube 34. In other words, the distances between the front wall 22 and the front end of the support surface 342A and between the rear wall 23 and the rear end of the support surface 342A may be reduced compared to the first embodiment. This further suppresses depression of the seat cushion 33 as compared to the first embodiment.

A comparative example will now be described with reference to Fig. 6. In this example, to avoid redundancy, like or same reference numerals are given to those components that are the same as the corresponding components of the first embodiment. Such components will not be described in detail. Here, a retaining tube 34B is used. The retaining tube 34B includes an arcuate support surface 342B that bulges upward towards the middle. The radius of curvature for the arc of the support surface 342B is set to be a large value. An air bag 25, which is folded into an accordion-like manner, has an accordion folded part 253 held on the support surface 342B. The accordion folded part 253 is inflated and deployed only upward. The depression of the seat cushion 33 into the accommodation recess 21 is also suppressed by the arcuate support surface 342B, which has a large radius of curvature.

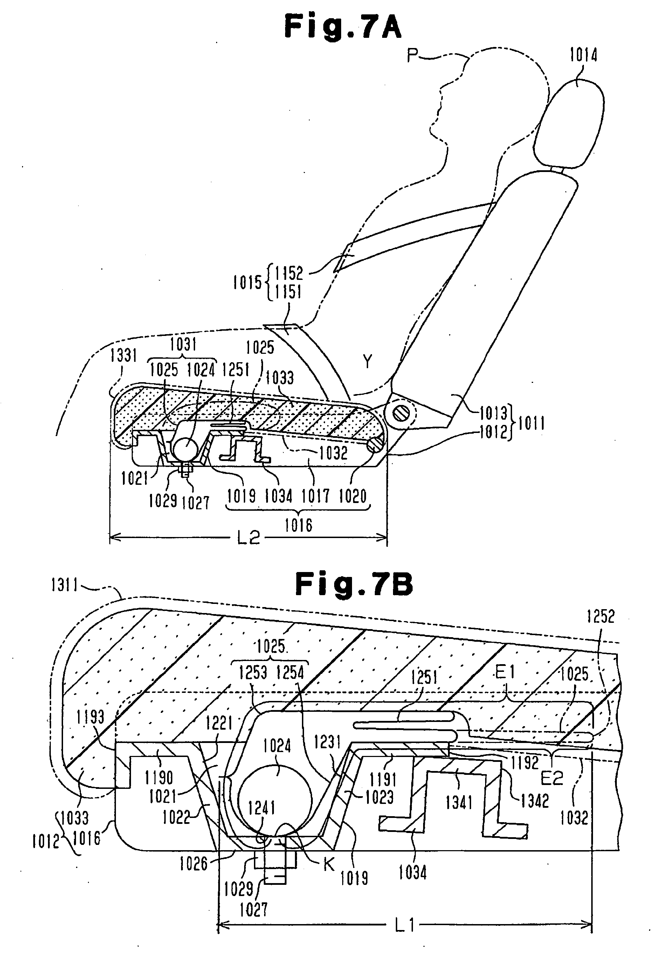

A fourth embodiment of the present invention will now be described with reference to Figs. 7 to 9. As shown in Fig. 7A, a seat 1011 arranged in a passenger compartment (not shown) includes a seat rest 1012, a backrest 1013 that can be reclined backward with respect to the seat rest 1012, and a headrest 1014 arranged at the top of the backrest 1013.

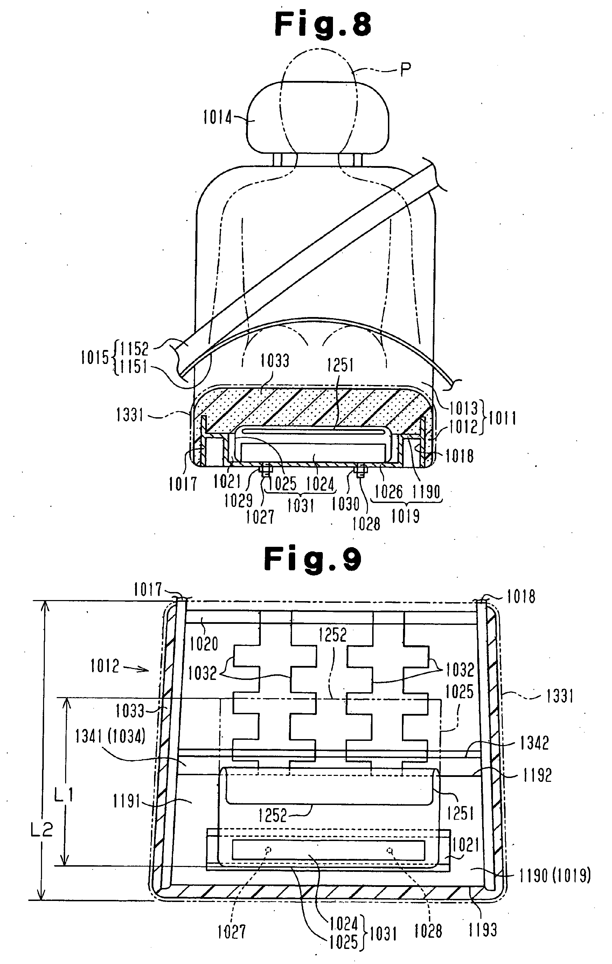

Referring to Fig. 8, the seat belt 1015, which is a three point seat belt, restrains a passenger P who is sitting on the seat 1011. The seat belt 1015 has a lap belt portion 1151, which is extended horizontally from the left side of the waist Y of the passenger P, across the front of the waist Y, and to the right side of the waist Y. The seat belt 1015 has a shoulder belt portion 1152, which is extended diagonally from the shoulder, across the front of the chest, and to the side of the waist Y.

With reference to Fig. 7A, a metal frame 1016 forming the seat rest 1012 includes a left side frame 1017, a right side frame 1018, a first bottom frame 1019 and second bottom frame 1034, and a rod-shaped rear frame 1020. The first bottom frame 1019 and the second bottom frame 1034 are connected to and extends between the front end of the side frames 1017 and 1018 (side frame 1018 is shown in Fig. 8). The rear frame 1020 extends between the side frames 1017 and 1018 at the rear end of the side frames 1017 and 1018.

Referring to Fig. 7B, the first bottom frame 1019 includes a support wall 1190, a front wall 1022 and rear wall 1023 connected to the support wall 1190 so as to extend vertically downward from the support wall 1190, and a bottom wall 1026 connecting the lower end of the front wall 1022 and the lower end of the rear wall 1023. The support wall 1190, the front wall 1022, the rear wall 1023, and the bottom wall 1026 are each planar. The front wall 1022, the rear wall 1023, and the bottom wall 1026 form an accommodation recess 1021 that extends downward. In other words, the accommodation recess 1021, which extends downward, is formed in the first bottom frame 1019. The accommodation recess 1021 extends toward the left and right of the seat rest 1012.

As shown in Fig. 7B, the front wall 1022 of the accommodation recess 1021 is inclined forward, and the rear wall 1023 of the accommodation recess 1021 is inclined rearward. The front wall 1022 has a forwardly inclined inner surface 1221 that faces the rear wall 1023, and the rear wall 1023 has a rearwardly inclined inner surface 1231 facing the front wall 1022. The height of the front wall 1022 from the bottom wall 1026 of the accommodation recess 1021 is set to be the same as the height of the rear wall 1023 from the bottom wall 1026. Thus, the support wall 1190 and the bottom wall 1026 extend parallel to each other.

As shown in Fig. 8, an inflator 1024 serving as a gas generation source is accommodated in the accommodation recess 1021. The inflator 1024, which is cylindrical, is fixed by screws to the bottom wall 1026 of the accommodation recess 1021 and contained in an air bag 1025, which is made of fabric. Two screws 1027 and 1028 are fixed to the peripheral wall of the inflator 1024. The screws 1027 and 1028 extend out of the air bag 1025 and through the bottom wall 1026 from the upper side. Nuts 1029 and 1030 are fastened to the screws 1027 and 1028, which project downward from the bottom wall 1026, to connect the inflator 1024 to the bottom wall 1026 and the air bag 1025 to the inflator 1024.

Referring to Fig. 7B, the air bag 1025, the inflator 1024 and the set rest 1012 form a passenger protection device 1031. The air bag 1025 out of the accommodation recess 1021 and onto the upper surface of a rear support wall 1191, which is located at the rear part of the support wall 1190. The distal end of the air bag 1025 is folded inwardly from the rear towards the front of the seat rest 1012 of the seat 1011. Inward folding refers to a folding method of folding the distal end of the air bag 1025 once so that the distal end of the air bag 1025 goes into the air bag 1025. The inwardly folded part 1251 of the distal end of the air bag 1025 is held on the rear support wall 1191 in a flat state. The inwardly folded part 1251 is arranged outside the accommodation recess 1021 and towards the rear of the accommodation recess 1021. In other words, the inwardly folded part 1251 is arranged from the accommodation recess 1021 to a position spaced apart towards the rear of the accommodation recess 1021.

The dotted lines in Fig. 7B show the air bag 1025 in a state in which gas is not supplied from the inflator 1024, that is, in a state of non-inflation in which the air bag 1025 is extended from the front toward the rear of the seat rest 1012. The distal end 1252 of the air bag 1025 is the position where the fabric is folded into two and has a linear shape. At this part, the fabric positioned on the upper side is referred to as an upper sheet 1253 and the fabric positioned lower side is referred to as a lower sheet 1254. The peripheral part of the upper sheet 1253 and the peripheral part of the lower sheet 1254 excluding the distal end 1252 are sutured to each other. The air bag 1025 has a sheet length E1 extending from a connection position K, at which the air bag 1025 is connected to the inflator 1024 by fastening the nuts 1029 and 1030, to the front of the inflator 1024, and then to the distal end 1252 of the air bag 1025. The air bag 1025 also has a sheet length E2 extending from the connection position K, to the rear of the inflator 1024, and then to the distal end 1252 of the air bag 1025. The sheet length E1 is longer than the sheet length E2. The connection position K is in correspondence with the screws 1027 and 1028 at the lower end 1241 of the inflator 1024 and the bottom wall 1026 of the accommodation recess 1021 and with the lower part of the air bag 1025 located at the lower end 1241 of the inflator 1024.

When the air bag 1025 is in a folded state before inflation and deployment, the fabric of the air bag 1025 extending from the connection position K to the distal end 1252 of the air bag 1025 via the front of the inflator 1024 is located rearwards from the front wall 1022 of the accommodation recess 1021.

A cushion tension spring 1032 for improving sitting comfort extends from the rear support wall 1191 of the first bottom frame 1019 to the rear frame 1020. The seat cushion 1033, which forms the seat rest 1012 with the frame 1016, covers the frame 1016, the cushion tension spring 1032, and the air bag 1025 from above. The seat cushion 1033 is covered by a cover 1331 made of cloth or leather.

The second bottom frame 1034, which is for reinforcement, is arranged under the rear support wall 1191 and located rearwards from the support wall 1190 of the first bottom frame 1019. The second bottom frame 1034, which has a U-shaped cross-section, is connected to and extends between the side frames 1017 and 1018. The second bottom frame 1034 supports the rear support wall 1191 of the first bottom frame 1019 from underneath. The second bottom frame 1034 has a support wall 1341 with a rear end 1342 located rearwards from a rear end 1192 of the rear support wall 1191 in the first bottom frame 1019. The support wall 1341 of the second bottom frame 1034 is located towards the front from an intermediate position between the front end 1193 of the first bottom frame 1019 and the rear end of the rear frame 1020. The accommodation recess 1021 is located towards the front from an intermediate position of the seat cushion 1033 with respect to the forward direction. The first bottom frame 1019 and the second bottom frame 1034 support the seat cushion 1033 from underneath.

In the state shown by dotted lines in Fig. 9, the air bag 1025 is not supplied with gas from the inflator 1024, that is, in a state of non-inflation in which the air bag 1025 is extended from the front to the rear of the seat rest 1012. The entire length L1 with respect to the forward direction of the air bag 1025 is set to be less than or equal to two thirds of the entire length L2 of the seat cushion 1033 with respect to the forward direction.

When a collision detection means (e.g., abnormal acceleration detection means) (not shown) detects collision (e.g., abnormal acceleration), a control means (not shown) operates the inflator 1024, and high pressure gas is supplied from the inflator 1024 into the air bag 1025. As shown by the dotted lines in Fig. 7B, this inflates and deploys the air bag 1025 from the accommodation recess 1021 towards the rear end 1342 of the support wall 1341 of the second bottom frame 1034 on the bottom frames 1019 and 1034. The rear support wall 1191 of the first bottom frame 1019 and the support wall 1341 of the second bottom frame 1034 support the inflated and deployed air bag 1025 from underneath.

The distal end of the inflated and deployed air bag 1025 extends rearward from the rear end 1342 of the support wall 1341. The inflation and deployment of the air bag 1025 lifts the seat cushion 1033 and the rear of the thighs of the passenger P sitting on the seat 1011. The lifting of the rear of the thighs of the passenger P aids in restraining the passenger P so that the waist Y of the passenger P does not move forward.

The fourth embodiment has the advantages described below.
(7) The inwardly folded part 1251 is folded once into the air bag 1025 from the rear towards the front of the seat rest 1012. The air bag 1025 is inflated and deployed from the inside of the air bag 1025 towards the rear of the seat rest 1012 by the high pressure gas generated from the inflator 1024. The air bag 1025 is inflated upward by the high pressure gas generated from the inflator 1024.
   The inwardly folded part 1251 is held in a flat state in the air bag 1025. Thus, the air bag 1025 rapidly inflates upward before the inwardly folded part 1251 is released and deployed from the inside of the air bag 1025. In other words, the inwardly folded part 1251 contributes to the rapid upward inflation of the air bag 1025 and prevents the occurrence of the submarine phenomenon.
(8) If the entire length L1 of the air bag 1025 is short, for example, if L1=2×L2/3 or L1=L2/2 is satisfied, it is difficult to fold the distal end of the air bag 1025 into a number of folds through cactus folding. However, the inward folding in which the distal end of the air bag 1025 is folded into the air bag 1025 only once easily forms a flat inwardly folded part 1251 even if the entire length L1 of the air bag 1025 is short and set to be less than or equal to two thirds the entire length L2 of the seat cushion 1033 in a state of non-inflation and no folding.
(9) When the entire length L1 of the air bag 1025 is set in a range of 2×L2/3 to L2/2, the occurrence of the submarine phenomenon is prevented and the load on the passenger P when the air bag 1025 is inflated and deployed is reduced.
(10) The thickness of the overlapping part (folded and overlapped part of the distal end of the inwardly folded air bag 1025) at the portion of the upper sheet 1253 contacting the inwardly folded part 1251 of the air bag 1025, the portion of the lower sheet 1254 contacting the inwardly folded part 1251, and the inwardly folded part 1251 is thinner as compared when this portion is folded into a number of folds through cactus folding. Therefore, the air bag 1025 with the inwardly folded part 1251 has a higher sitting comfort compared to when folding an air bag into a number of folds through cactus folding.
(11) The inflator 1024 is accommodated in the accommodation recess 1021, and the high pressure gas generated in the inflator 1024 first travels upward from the inside of the accommodation recess 1021. Thus, the air bag 1025 containing the inflator 1024 rapidly and easily inflates upward on the inflator 1024, that is, on the accommodation recess 1021. In other words, the rear of the thighs of the passenger P is rapidly lifted by the inflator 1024, which is accommodated in the accommodation recess 1021.
(12) If the inwardly folded part 1251 were to partially extend into the accommodation recess 1021 or to a location immediately above the accommodation recess 1021, the high pressure gas generated from the inflator 1024 and directed upward of the accommodation recess 1021 would directly impinge the extending portion of the inwardly folded part 1251. This would strongly forces the inwardly folded part 1251 against the upper sheet 1253. Thus, the inwardly folded part 1251 may not appropriately inflate and deploy from the front towards the rear of the seat rest 1012. Further, such direct impinging of the high pressure gas would strongly rub the inwardly folded part 1251 and the upper sheet 1253 against each other and damage the air bag 1025.
   The inwardly folded part 1251 is arranged outside and towards the rear of the accommodation recess 1021. Thus, the high pressure gas generated from the inflator 1024 and directed upward of the accommodation recess 1021 does not directly impinge the inwardly folded part 1251. In other words, the air bag 1025 is appropriately inflated and deployed from the front towards the rear of the seat rest 1012 by the structure in which the inwardly folded part 1251 is arranged to extend from the accommodation recess 1021 towards the rear of the accommodation recess 1021.
(13) The air bag 1025 must smoothly inflate and deploy towards the rear of the seat rest 1012 from the accommodation recess 1021 to rapidly lift the rear of the thighs of the passenger P. The sheet length E1 of the air bag 1025 is set to be longer than the sheet length E2 of the air bag 1025. The relationship in length of the sheets forming the air bag 1025, which includes a folded part (inwardly folded part 1251), smoothly inflates and deploys the distal end of the air bag 1025 towards the rear of the seat rest 1012 from the accommodation recess 1021.
(14) It is preferred that the air bag 1025 be rapidly inflated and deployed from the accommodation recess 1021 towards the rear of the seat rest 1012 to rapidly lift the rear of the thighs of the passenger P. To this end, the reactive force from the accommodation recess 1021 towards the rear of the seat rest 1012 is preferably applied to the gas pressure in the air bag 1025.
   The inner surface 1221 serving as the front wall surface of the accommodation recess 1021 is inclined forward. The gas pressure in the air bag 1025 obtains the reactive force from the inner surface 1221 that is inclined forward. In other words, the inner surface 1221 surface functions as a surface (portion) for receiving the reactive force of the gas pressure during inflation and deployment of the air bag 1025. The inner surface 1221 is an optimal portion for receiving the reactive force for the gas pressure of the air bag 1025 during inflation and deployment from the accommodation recess 1021 towards the rear of the seat rest 1012.
(15) The air bag 1025 must smoothly inflate and deploy from the accommodation recess 1021 towards the rear of the seat rest 1012 to rapidly lift the rear of the thighs of the passenger P. To this end, it is essential to smoothly lead the high pressure gas generated from the inflator 1024 from the inside of the accommodation recess 1021 towards the rear support wall 1191 of the first bottom frame 1019. The inner surface 1231 of the rear wall 1023 forming the accommodation recess 1021 is inclined rearward. The high pressure gas generated from the inflator 1024 is smoothly guided from the inside of the accommodation recess 1021 to the rear support wall 1191 of the first bottom frame 1019 by the inner surface 1231. In other words, the inner surface 1231 that is inclined rearward is an optimal portion for smoothly guiding the air bag 1025 towards the rear when the air bag 1025 is inflated and deployed from the accommodation recess 1021 towards the rear of the seat rest 1012.

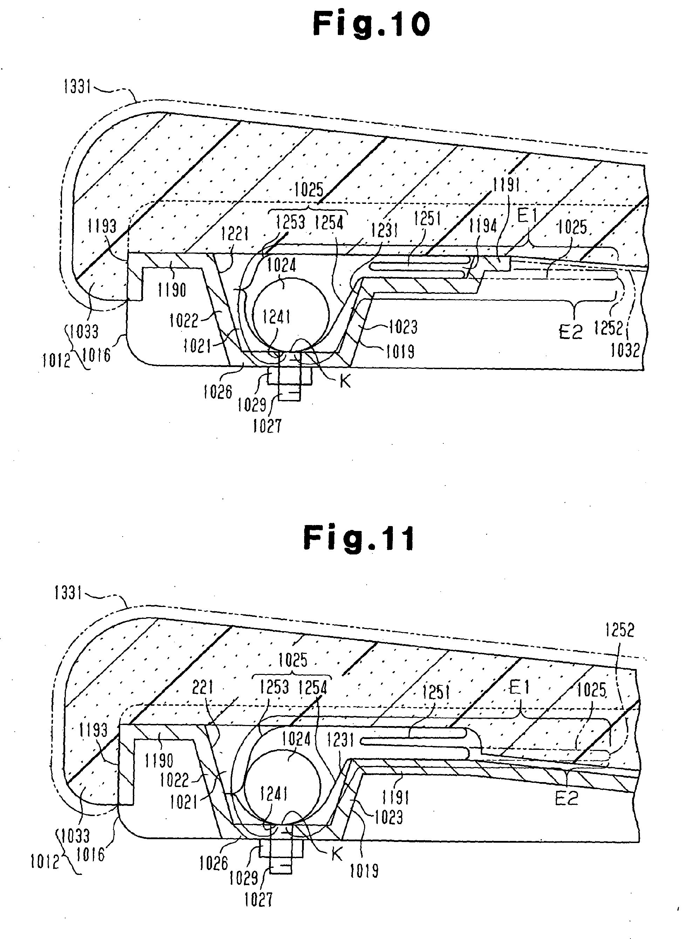

A fifth embodiment of the present invention will now be described with reference to Fig. 10. In the fifth embodiment, to avoid redundancy, like or same reference numerals are given to those components that are the same as the corresponding components of the fourth embodiment. Such components will not be described in detail. In the fifth embodiment, the second bottom frame 1034 of the fourth embodiment is omitted. A mounting recess 1194 is formed in the rear support wall 1191 of the bottom frame 1019. The inwardly folded part 1251 is arranged in the mounting recess 1194. When the air bag 1025 inflates, the inwardly folded part 1251 deploys onto the rear support wall 1191 from the inside of the mounting recess 1194. Such deployment of the inwardly folded part 1251 rapidly inflates the air bag 1025 upward from the inflator 1024 (i.e., above the accommodation recess 1021).

A sixth embodiment of the present invention will now be described with reference to Fig. 11. In the sixth embodiment, to avoid redundancy, like or same reference numerals are given to those components that are the same as the corresponding components of the fourth embodiment. Such components will not be described in detail. In the sixth embodiment, the second bottom frame 1034 and the cushion tension spring 1032 of the fourth embodiment are omitted. The rear support wall 1191 of the bottom frame 1019 is arranged near the basal end of the backrest 1013 (see Fig. 7A).

The rear support wall 1191 located at the rear portion of the support wall 1190 is formed at a level that is lower than the other portions of the support wall 1190. With such a structure, the high pressure gas generated from the inflator 1024 is smoothly guided from the accommodation recess 1021 to the rear support wall 1191 of the bottom frame 1019, and the air bag 1025 is smoothly inflated and deployed from the accommodation recess 1021 towards the rear of the seat rest 1012.

It should be apparent to those skilled in the art that the present invention may be embodied in many other specific forms without departing from the scope of the invention as defined in the claims. Particularly, it should be understood that the present invention may be embodied in the following forms.

In the second embodiment, the support surface 342 may face the lower surface 332 of the seat cushion 33 with part of the support surface 342 extending out of the accommodation recess 21. In the same manner, in the comparative example, the support surface 342B may face the lower surface 332 of the seat cushion 33 with part of the support surface 342B extending out of the accommodation recess 21.

In the second and third embodiments and the comparative example, the support surfaces 342, 342A, and 342B may face the lower surface 332 of the seat cushion 33 outside the accommodation recess 21.

In the first to the third embodiments and the comparative example, the inflator 24 may be fastened by screws to the front wall 22 or the rear wall 23 of the accommodation recess 21. In other words, the air bag 25 may be held between the front wall 22 or the rear wall 23 and the holder.

In the second embodiment, the support surface 342 may extend parallel to a plane connecting the corner at the upper end of the front wall 22 and the corner at the upper end of the rear wall 23. Alternatively, the support surface 342 may be inclined so as to be flush with such a plane.

In the fourth to the sixth embodiments, the inflator 1024 may fastened by screws to the front wall 1022 or the rear wall 1023 of the accommodation recess 1021.

In the fourth to the sixth embodiments, the inflator 1024 may be arranged on a bottom frame from which the accommodation recess 1021 is omitted.

At least parts of the first to third embodiments may be used in the fourth to sixth embodiments. Alternatively, at least parts of the fourth to sixth embodiments may be used in the first to third embodiments.

The present examples and embodiments are to be considered as illustrative and not restrictive, and the invention is not to be limited to the details given herein, but may be modified within the scope and equivalence of the appended claims.

A retaining tube having a substantially equilateral hexagonal shape is accommodated in an accommodation recess formed in a bottom frame of a seat rest. An inflator serving as a gas generation source is accommodated in the retaining tube. The retaining tube is contained in an air bag made of cloth. The inflator is cylindrical and fastened by screws to the bottom wall of the accommodation recess. A support surface, which is one of the six planes configuring the peripheral surface of the retaining tube, extends parallel to the upper surface of the support wall. The support surface is arranged at a position slightly lower than the upper surface. The support surface faces the lower surface of the seat cushion.

## Claims

1. A passenger protection device for arrangement in a vehicle, the passenger protection device comprising:
a seat rest (1012) mountable in the vehicle for supporting a passenger (P);
a gas generation source (1024);
an air bag (1025) which inflates and deploys at the seat rest (1012) by gas generated from the gas generation source (1024);
a seat cushion (1033) forming the seat rest (1012); and
a bottom frame (1019) supporting the seat cushion (1033) from underneath,
wherein
the bottom frame (1019) includes a front wall (1022), a rear wall (1023), and a bottom wall (1026), which form a downwardly extending accommodation recess (1021) in the bottom frame (1019),
the accommodation recess (1021) extends along the width of the seat rest (1012),
the gas generation source (1024) is accommodated in the accommodation recess (1021),
the air bag (1025) is configured to have a distal end (1252) inwardly folded from the rear towards the front of the seat rest (1012) when in a state of non-inflation and non-deployment,
an inwardly folded part (1251) at the distal end (1252) of the air bag (1025) is arranged outside of the accommodation recess (1021) and towards the rear of the accommodation recess (1021), **characterized in that**
the air bag (1025) is further configured to be inflated and deployed from front to rear of the seat rest (1012) on the bottom frame (1019, 1034) such that the air bag (1025) rapidly inflates upward before the inwardly folded part (1251) is released and deployed from the inside of the air bag (1025).

2. The passenger protection device according to claim 1, **characterized in that** the air bag (1025) has an entire length (L1) with respect to the forward and rearward direction of the air bag (1025) from the front towards the rear of the seat rest (1012) in a state of non-inflation that is less than or equal to two thirds the entire length (L2) of the seat cushion (1033) in the forward and rearward direction.

3. The passenger protection device according to claim 2, **characterized in that** the air bag (1025) has a sheet length (E1) taken from a lower part of the air bag (1025) corresponding to a lower end (1241) of the gas generation source (1024) and via the front of the gas generation source (1024) to the distal end (1252) of the air bag (1025) that is longer than a sheet length (E2) taken from the lower part via the rear of the gas generation source (1024) to the distal end (1252) of the air bag (1025).

4. The passenger protection device according to any one of claims 1 to 3, **characterized in that** the seat cushion (1033) has an intermediate position with respect to the frontward and rearward direction; and
the accommodation recess (1021) is located towards the front from the intermediate position.

5. The passenger protection device according to any one of claims 1 to 4, **characterized in that** the air bag (1025) is configured so as to lift the seat cushion (1033) of the seat rest (1012) when inflated and deployed, the passenger protection device further comprising:
a holder, fixed to the bottom frame (1019), for accommodating the gas generation source (1024), with the holder being contained in the air bag (1025), being arranged in the accommodation recess (1021), and including a support surface facing the lower surface of the seat cushion (1033) for supporting the air bag (1025) .

## Patentansprüche

1. Insassenschutzvorrichtung zur Anordnung in einem Fahrzeug, wobei die Insassenschutzvorrichtung folgendes aufweist:
eine Sitzaufnahme (1012), die in dem Fahrzeug zum Stützen eines Insassen (P) montierbar ist;
eine Gaserzeugungsquelle (1024);
einen Airbag (1025), der sich durch Gas, das von der Gaserzeugungsquelle (1024) erzeugt wird, an der Sitzaufnahme (1012) aufbläst und entfaltet;
ein Sitzkissen (1033), das die Sitzaufnahme (1012) ausbildet; und
einen Bodenrahmen (1019), der das Sitzkissen (1033) von unten stützt,
wobei
der Bodenrahmen (1019) eine vordere Wand (1022), eine hintere Wand (1023) und eine Bodenwand (1026) aufweist, die eine sich nach unten hin erstreckende Unterbringungsvertiefung (1021) in dem Bodenrahmen (1019) ausbilden,
sich die Unterbringungsvertiefung (1021) entlang der Breite der Sitzaufnahme (1012) erstreckt,
die Gaserzeugungsquelle (1024) in der Unterbringungsvertiefung (1021) untergebracht ist,
der Airbag (1025) gestaltet ist, um ein distales Ende (1252) zu haben, das von der Rückseite zu der Vorderseite der Sitzaufnahme (1012) einwärts gefaltet ist, wenn dieser in einem nicht aufgeblasenen und nicht entfalteten Zustand ist,
ein einwärts gefaltetes Teil (1251) an dem distalen Ende (1252) des Airbags (1025) außerhalb der Unterbringungsvertiefung (1021) und zu der Rückseite der Unterbringungsvertiefung (1021) hin angeordnet ist,
**dadurch gekennzeichnet, dass**
der Airbag (1025) ferner gestaltet ist, um von der Vorderseite zu der Rückseite der Sitzaufnahme (1012) an dem Bodenrahmen (1019, 1034) aufgeblasen und entfaltet zu werden, so dass der Airbag (1025) sich schnell aufwärts aufbläst, bevor der einwärts gefaltete Teil (1251) gelöst wird und von der Innenseite des Airbags (1025) entfaltet wird.

2. Insassenschutzvorrichtung nach Anspruch 1, **dadurch gekennzeichnet, dass** der Airbag (1025) eine Gesamtlänge (L1) hinsichtlich der Vorwärts- und Rückwärtsrichtung des Airbags (1025) von der Vorderseite zu der Rückseite der Sitzaufnahme (1012) in einem nicht aufgeblasenen Zustand hat, die kleiner als oder gleich wie zwei Drittel der Gesamtlänge (L2) des Sitzkissens (1033) in der Vorwärts- und Rückwärtsrichtung ist.

3. Insassenschutzvorrichtung nach Anspruch 2, **dadurch gekennzeichnet, dass** der Airbag (1025) eine Bogenlänge (E1) hat, die von einem unteren Teil des Airbags (1025), der einem unteren Ende (1241) der Gaserzeugungsquelle (1024) entspricht, und über die Vorderseite der Gaserzeugungsquelle (1024) zu dem distalen Ende (1252) des Airbags (1025) genommen ist, die länger als eine Bogenlänge (E2) ist, die von einem unteren Teil über die hintere Seite der Gaserzeugungsquelle (1024) zu dem distalen Ende (1252) des Airbags (1025) genommen ist.

4. Insassenschutzvorrichtung nach einem der Ansprüche 1 bis 3, **dadurch gekennzeichnet, dass** das Sitzkissen (1033) eine Zwischenposition hinsichtlich der Vorwärts- und Rückwärtsrichtung hat; und
sich die Unterbringungsvertiefung (1021) zu der Vorderseite von der Zwischenposition hin befindet.

5. Insassenschutzvorrichtung nach einem der Ansprüche 1 bis 4, **dadurch gekennzeichnet, dass** der Airbag (1025) gestaltet ist, um das Sitzkissen (1033) der Sitzaufnahme (1012) anzuheben, wenn dieser aufgeblasen und entfaltet ist, wobei die Insassenschutzvorrichtung ferner folgendes aufweist:
einen Halter zum Unterbringen der Gaserzeugungsquelle (1024), der an dem Bodenrahmen (1019) befestigt ist, wobei der Halter in dem Airbag (1025) enthalten ist, welcher in der Unterbringungsvertiefung (1021) angeordnet ist, und eine Stützfläche aufweist, die der unteren Fläche des Sitzkissens (1033) zum Stützen des Airbags (1025) zugewandt ist.

## Revendications

1. Dispositif de protection de passager pour un agencement dans un véhicule, le dispositif de protection de passagers comprenant :
une assise de siège (1012) pouvant être montée dans le véhicule pour soutenir un passager (P) ;
une source (1024) de génération de gaz ;
un coussin de sécurité gonflable (1025) qui gonfle et se déploie au niveau de l'assise de siège (1012) par un gaz généré de la source (1024) de génération de gaz ;
un coussin de siège (1033) formant l'assise de siège (1012) ; et
un cadre inférieur (1019) soutenant le coussin de siège (1033) d'en-dessous,
où
le cadre inférieur (1019) comporte une paroi avant (1022), une paroi arrière (1023), et une paroi inférieure (1026), qui forme un évidement de réception (1021) s'étendant vers le bas dans le cadre inférieur (1019),
l'évidement de réception (1021) s'étend le long de la largeur de l'assise de siège (1012),
la source (1024) de génération de gaz est reçue dans l'évidement de réception (1021),
le coussin de sécurité gonflable (1025) est configuré pour avoir une extrémité distale (1252) pliée vers l'intérieur de l'arrière vers l'avant de l'assise de siège (1012) lors d'un état de non gonflage et de non déploiement,
une partie (1251) pliée vers l'intérieur au niveau de l'extrémité distale (1252) du coussin de sécurité gonflable (1025) est agencée à l'extérieur de l'évidement de réception (1021) et vers l'arrière de l'évidement de réception (1021), **caractérisé en ce que**
le coussin de sécurité gonflable (1025) est en plus configuré pour être gonflé et déployé de l'avant vers l'arrière de l'assise de siège (1012) sur le cadre inférieur (1019, 1034) de sorte que le coussin de sécurité gonflable (1025) gonfle rapidement vers le haut avant que la partie pliée vers l'intérieur (1251) ne soit dégagée et déployée de l'intérieur du coussin de sécurité gonflable (1025).

2. Dispositif de protection de passagers selon la revendication 1, **caractérisé en ce que** le coussin de sécurité gonflable (1025) a une longueur totale (L1) par rapport à la direction vers l'avant et vers l'arrière du coussin de sécurité gonflable (1025) de l'avant vers l'arrière de l'assise de siège (1012) dans un état de non gonflement qui est inférieur ou égal à deux tiers de la longueur totale (L2) du coussin de siège (1033) dans la direction vers l'avant et vers l'arrière.

3. Dispositif de protection de passagers selon la revendication 2, **caractérisé en ce que** le coussin de sécurité gonflable (1025) a une longueur (E1) de tôle prise d'une partie inférieure du coussin de sécurité (1025) correspondant à une extrémité inférieure (1241) de la source (1024) de génération de gaz et à travers l'avant de la source (1024) de génération de gaz jusqu'à l'extrémité distale (1252) du coussin de sécurité gonflable (1025) qui est plus longue qu'une longueur (E2) de tôle prise de la partie inférieure à travers l'arrière de la source (1024) de génération de gaz jusqu'à l'extrémité distale (1252) du coussin de sécurité gonflable (1025).

4. Dispositif de protection de passagers selon l'une quelconque des revendications 1 à 3, **caractérisé en ce que** le coussin de siège (1033) a une position intermédiaire par rapport à la direction vers l'avant et vers l'arrière ; et
l'évidement de réception (1021) est situé vers l'avant de la position intermédiaire.

5. Dispositif de protection de passagers selon l'une quelconque des revendications 1 à 4, **caractérisé en ce que** le coussin de sécurité gonflable (1025) est configuré de sorte à relever le coussin de siège (1033) de l'assise de siège (1012) lorsqu'il est gonflé et déployé, le dispositif de protection de passagers comprenant en plus :
un support, fixé au cadre inférieur (1019), pour recevoir la source (1024) de génération de gaz, avec le support étant contenu dans le coussin de sécurité gonflable (1025), étant agencé dans l'évidement de réception (1021), et comportant une surface de soutien faisant face à la surface inférieure du coussin de siège (1033) pour soutenir le coussin de sécurité gonflable (1025).
